Europäisches Patentamt

**European Patent Office**

**Office européen des brevets**

(19)

(11) Veröffentlichungsnummer: **0 076 891**
A1

(12) # EUROPÄISCHE PATENTANMELDUNG

(21) Anmeldenummer: **82105457.4**

(22) Anmeldetag: **22.06.82**

(51) Int. Cl.³: **B 01 D 17/02,** C 02 F 1/40
// E03F5/16

(30) Priorität: **23.06.81 DE 3124556**
**11.02.82 DE 3204825**

(71) Anmelder: **Passavant-Werke AG & Co. KG,**
**D-6209 Aarbergen 7 (DE)**

(43) Veröffentlichungstag der Anmeldung: **20.04.83**
**Patentblatt 83/16**

(72) Erfinder: **Weiler, Walter, Wilhelmstrasse 59, D-6252 Diez**
**(DE)**

(74) Vertreter: **Glawe, Delfs, Moll & Partner Patentanwälte,**
**Postfach 26 01 62 Liebherrstrasse 20,**
**D-8000 München 26 (DE)**

(84) Benannte Vertragsstaaten: **AT CH DE FR IT LI NL**

(54) **Vorrichtung zum Abtrennen von Leichtflüssigkeiten wie Öl und Benzin aus Abwasser, mit einem Abscheidebehälter und einem Filter.**

(57) Vorrichtung zum Abtrennen von Leichtflüssigkeiten wie Öl und Benzin aus Wasser, bei der das zu reinigende Wasser einen Abscheidebehälter (1), in welchem eine Schwerkrafttrennung erfolgt und die abgeschiedene Leichtflüssigkeit sich in Form einer zusammenhängenden Leichtflüssigkeitsschicht (24) an der freien Flüssigkeitsoberfläche ansammelt, und ein Filter (4) aus einem offenporigen Filtermaterial durchströmt. Eine Sperrvorrichtung (21, 22) schließt den Ablauf (18) des Reinwassers bei Erreichen einer maximal zulässigen Dicke der Leichtflüssigkeitsschicht (24). Die aus einem für die Leichtflüssigkeit koaleszierend wirkenden Material bestehende Filterfüllung (4) ist im Abscheidebehälter (1) angeordnet und füllt dessen Höhe im wesentlichen vollständig bis zumindest in die Nähe der freien Flüssigkeitsoberfläche aus.

0076891

Passavant-Werke AG & Co. KG
6209 Aarbergen 7

Vorrichtung zum Abtrennen von Leichtflüssigkeiten wie Öl,
Benzin od.dgl. aus Wasser, mit einem Abscheidebehälter und
einem Filter

Die Erfindung betrifft eine Vorrichtung zum Abtrennen
von Leichtflüssigkeiten wie Öl, Benzin od.dgl. aus Wasser,
bei der das zu reinigende Wasser einen Abscheidebehälter,
in welchem eine Schwerkrafttrennung zwischen Leichtflüssigkeit und Wasser erfolgt und die abgeschiedene Leichtflüssigkeit sich in Form einer zusammenhängenden Leichtflüssigkeitsschicht an der freien Flüssigkeitsoberfläche ansammelt,
und ein Filter aus einem offenporigen Filtermaterial durchströmt, mit einem im Abscheidebehälter angeordneten, auf
die Dicke der Leichtflüssigkeitsschicht ansprechenden Fühler, der bei Erreichen einer maximal zulässigen Schichtdicke der Leichtflüssigkeitsschicht das Sperren des Abzugs
des Reinwassers aus dem Filter steuert.

In üblichen Vorrichtungen dieser Art ist das Filter dem Abscheidebehälter als Restreinigungsfilter nachgeschaltet und getrennt von diesem ausgebildet. Diese beiden Bestandteile der Vorrichtung sind entsprechend ihren unterschiedlichen Aufgaben unterschiedlich dimensioniert und ausgestaltet. Im Abscheidebehälter muß die Hauptmenge der im Wasser vorhandenen Leichtflüssigkeit durch Aufschwimmen abgeschieden werden. Die abgeschiedene Leichtflüssigkeit muß kontinuierlich oder von Zeit zu Zeit aus dem Abscheider entfernt werden. Bei diskontinuierlichem Abzug muß die Speicherfähigkeit des Abscheidebehälters ausreichend groß bemessen sein. Eine automatische Ablaufsperre muß sicherstellen, daß bei übermäßigem Anwachsen der Schichtdicke der abgeschiedenen Leichtflüssigkeitsschicht der Ablauf gesperrt wird, so daß keine abgeschiedene Leichtflüssigkeit in den Ablauf gelangen kann. Für die Konstruktion und Bemessung derartiger Abscheidebehälter gelten vorgeschriebene Baugrundsätze, die in der Bundesrepublik Deutschland durch DIN 1999 genormt sind.

Das dem Abscheidebehälter nachgeschaltete Filter dient zur Beseitigung der im Wasser noch enthaltenden Restverschmutzung, d.h. derjenigen Anteile der Leichtflüssigkeit, die eine zu geringe Tröpfchengröße und damit zu geringen Auftrieb haben, um während der Verweilzeit im Abscheide-

- 3 -

behälter abgeschieden zu werden. Die Abtrennung dieser Restanteile erfolgt durch Wechselwirkung mit der Oberfläche der Filterfüllung. In der Regel besteht diese aus einem auf die Leichtflüssigkeit adsorbierend wirkenden Material. Auch Filter mit einer koaleszierend wirkenden, d.h. die Zusammenlagerung der Leichtflüssigkeitsteilchen zu größeren Tröpfchen begünstigenden Filterfüllung, sind bekannt.

Die Aufteilung der Vorrichtung der genannten Art in den Abscheider und das nachgeschaltete Filter verursacht einen erheblichen Aufwand und Platzbedarf. Auch ist es unerwünscht, daß die Reinigungsintervalle des Abscheiders und die Zeitintervalle, in denen die Filterfüllung erschöpft ist und erneuert oder regeneriert werden muß, voneinander unabhängig sind und gesondert überwacht werden müssen.

Aus AT-PS 313 206 ist eine Vorrichtung der eingangs genannten Art bekannt, bei der Abscheidebehälter und Filter in einem gemeinsamen Behälter vereinigt sind. Dabei wird jedoch nach wie vor unterschieden zwischen einem nur der Schwerkrafttrennung dienenden Abscheideabteil und einem die Filterfüllung aufnehmenden Filterabteil des Behälters, die durch eine perforierte Trennwand voneinander getrennt sind. Der bauliche Aufwand und insbesondere der Bedarf an Stellfläche ist bei dieser bekannten Vorrichtung zwar verringert, ansonsten gelten aber weitgehend ebenfalls die
vorstehend genannten Nachteile einer getrennten Abscheider-
Filteranordnung.

Der Erfindung liegt die Aufgabe zugrunde, eine Vorrichtung der genannten Art zu schaffen, die bei einfacher
Konstruktion und Betriebsweise und geringerem Platzbedarf
eine verbesserte Abscheidewirksamkeit aufweist.

Diese Aufgabe wird erfindungsgemäß dadurch gelöst,
daß die aus einem für die Leichtflüssigkeit koaleszierend
wirkenden Material bestehende Filterfüllung im Abscheiderbehälter angeordnet ist und dessen Höhe im wesentlichen
vollständig bis in den Bereich der freien Flüssigkeitsoberfläche ausfüllt.

Erfindungsgemäß werden somit der Abscheiderbehälter
und das Filter sowohl baulich als auch funktionsmäßig vollständig miteinander vereinigt. Es finden somit im gleichen
Volumen gleichzeitig nebeneinander die Vorgänge der Schwerkraftabscheidung und der Filterung durch koaleszierend wirkendes Filtermaterial statt. Hierdurch wird nicht nur eine
Verringerung des Platzbedarfs und eine bauliche und betriebsmäßige Vereinfachung der Vorrichtung erzielt, sondern es
wurde überraschenderweise gefunden, daß sich die Vorgänge der Schwerkraftabscheidung und Filterung gegenseitig derart günstig beeinflussen, daß insgesamt ein verbesserter Abscheidegrad erreicht wird. Die erfindungsgemäße Vorrichtung vereinigt also in sich die Vorteile eines auch kleine Restkonzentrationen von Leichtflüssigkeit aus dem Wasser entfernenden Filters und eines Abscheiders mit großer Kapazität für das Abscheiden und Speichern großer Mengen an Leichtflüssigkeit.

Vorzugsweise ragt die Filterfüllung mit ihrer Oberkante bis in die an der Flüssigkeitsoberfläche des Abscheiderabteils abgeschiedene Leichtflüssigkeitsschicht hinein. Dies bedeutet daß ein Teil der Filterfüllung ständig von abgeschiedener Leichtflüssigkeit um- und durchflutet ist. Es wurde gefunden, daß dies in überraschendem Maße zur Verbesserung der Abscheidewirkung beiträgt.

Gemäß einem weiteren bevorzugten Merkmal der Erfindung erfolgt die Zufuhr des zu reinigenden Wassers in oder über der abgeschiedenen Leichtflüssigkeit derart, daß das zu reinigende Wasser vor oder bei Eintritt in die Filterfüllung die abgeschiedene Leichtflüssigkeit durchströmen muß.

In weiterer Ausgestaltung der Erfindung ist eine Einrichtung zum ständigen oder periodischen Abziehen von Leicht-

- 6 -

flüssigkeit aus der schwimmenden Leichtflüssigkeitsschicht vorgesehen. Diese Vorrichtung kann ebenfalls durch einen auf die Dicke der Leichtflüssigkeit ansprechenden Fühler gesteuert sein.

Vorzugsweise besteht der auf die Dicke der Leichtflüssigkeit ansprechende Fühler, der bei Erreichen der maximal zulässigen Schichtdicke der Leichtflüssigkeitsschicht das Sperren des Reinwasserabzugs steuert, aus einem Schwimmer, der entsprechend dem Dichteunterschied zwischen Wasser und der Leichtflüssigkeit tariert ist; und in einer neben der Filterfüllung angeordneten Schwimmerkammer angeordnet ist, die von dem Rest des Behälters durch eine Trennwand getrennt ist und mit ihr über Öffnungen kommuniziert. Diese Öffnungen haben vorzugsweise einen größeren Durchströmungswiderstand als die Filterfüllung. Hierdurch wird verhindert, daß zu reinigendes Wasser unter Umgehung der Filterfüllung auf einer Kurzschlußströmung durch die Schwimmerkammer in den Ablauf gelangt. Gemäß einem anderen vorteilhaften Merkmal der Erfindung kann den Öffnungen eine Tauchwand vorgelagert sein, die den Zutritt von Leichtflüssigkeit zur Schwimmerkammer solange verhindert, bis durch Anwachsen der Leichtflüssigkeitsschicht deren Untergrenze bis auf Höhe der Unterkante der Tauchwand abgesunken ist.

Es ist vorteilhaft, wenn der Abzug des Reinwassers aus der Vorrichtung nicht durch Absaugen mittels einer Pumpe erfolgt, sondern wenn die Abzugsvorrichtung als Ablauf mit einer die Aufrechterhaltung des Flüssigkeitsspiegels im Behälter sichernden Überlaufkante ausgebildet ist und der Durchfluß durch das Filter durch die zuströmseitige Druckhöhe aufrechterhalten wird.

Ausführungsformen der Erfindung werden anhand der Zeichnung näher erläutert.

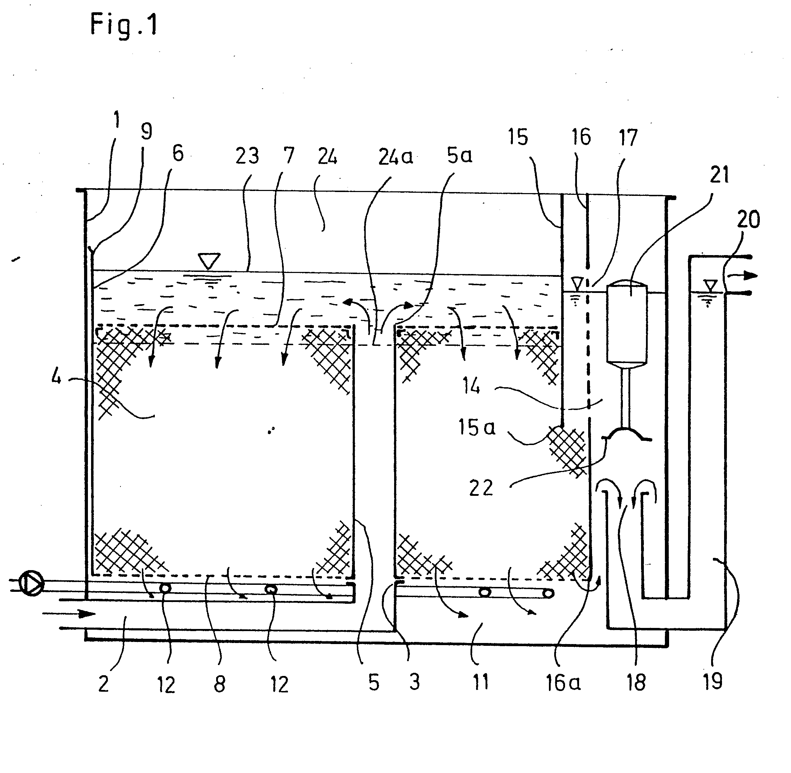

Fig. 1    zeigen Schnitte durch vier verschiedene Aus-
bis  4
           führungsformen des erfindungsgemäßen Filters.


Fig. 1 zeigt einen im Grundriß runden Filterbehälter 1, an den eine Zuleitung 2 für das zu trennende Gemisch von Wasser und Leichtflüssigkeit angeschlossen, ist.
Das Ende 3 der Zuleitung 2 ist als nach oben abgewinkelter
Stutzen ausgebildet. In dem Behälter 1 ist eine Filterfüllung 4 aus einem für die Leichtflüssigkeit, wie Öl, Benzin
od.dgl. koaleszierend, aber nicht stark adsorbierend wirkenden Material angeordnet. Die Filterfüllung 4 ist eingeschlossen in einer Umhüllung, die aus einem inneren, den
Rohrstutzen 3 nach oben verlängernden Standrohr 5, einem
äußeren Mantel 6 und oberen und unteren Drahtgittern, Rosten
oder Lochblechen 7, 8 besteht. Der Mantel 6 ist bei 9 flüssigkeitsdicht mit dem Behälter 1 verbunden.


Unterhalb der Filterflüllung 4 befindet sich eine
Kammer 11, in der Ringleitungen 12 für die Zuführung von
Spülflüssigkeit zur Rückspülung der Filterfüllung 4 angeordnet sind. Eine Auslaufkammer 14 ist vom Hauptraum des
Behälters 1 und der Filterfüllung 4 durch zwei Tauchwände 15, 16 getrennt. Die Unterkante 15a der ersten Tauchwand 15 liegt in einer Höhe zwischen der oberen und unteren
Begrenzung der Filterfüllung 4. Oberhalb der Höhe dieser
Unterkante 15 ist die zweite Tauchwand 16 mit Durchflußöffnungen (z.B. Schlitzen oder Perforationen) versehen. Ihre Unterkante 16a liegt in Höhe der unteren Begrenzung der Filterfüllung 4 oder noch tiefer. In der Ablaufkammer 14 befindet sich der als Standrohr ausgebildete Ablauf 18, der außerhalb des Behälters als Steigrohr 19 bis zu einer Überlaufkante 20 hochgezogen ist.

In der Ablaufkammer 14 befindet sich ein Schwimmer 21 mit einem Verschlußorgan 22 für den Ablauf 18. Der Auftrieb dieses Schwimmerverschlusses ist so bemessen, daß er den Ablauf verschließt, wenn eine den Schwimmer 21 umgebende Leichtflüssigkeitsschicht eine bestimmte Dicke erreicht hat.

Die Vorrichtung arbeitet wie folgt: Zu trennendes Gemisch wird über die Leitung 2 und das Standrohr 5 zugeführt, tritt über die Oberkante 5a des Standrohres 5 in den Abscheiderbehälter 1 ein, verteilt sich über die Oberfläche der Filterfüllung 4 und strömt durch diese nach unten. In der Filterfüllung 4 spielen sich gleichzeitig die für einen Schwerkraftabscheider charakteristischen Vorgänge, nämlich Schwerkraftabtrennung der Leichtflüssigkeitsteilchen und Ansammlung einer abgeschiedenen Leichtflüssigkeitsschicht 24 an der Oberfläche, und die für ein Koaleszenzfilter charakteristi-

0076891

schen Zusammenlagerungsvorgänge an der Oberfläche der Filterfüllung ab. Leichtflüssigkeit wird aus dem Wasser sowohl in großer Menge als auch mit sehr hoher Wirksamkeit abgeschieden. Das gereinigte Wasser tritt aus der Filterfüllung 4 nach unten in die Kammer 11 aus und strömt unter der Tauchwand 16 hindurch in die Ablaufkammer 14 und wird durch den Ablauf 18 abgezogen.

Die Höhe des Flüssigkeitsspiegels 23 im Filterbehälter 1 wird durch die Höhe der Überströmkante 20 im Ablauf sowie durch den Strömungswiderstand der Filterfüllung 4 bestimmt. Bei fortgesetztem Betrieb der Vorrichtung sammelt sich eine immer stärkere abgeschiedene Leichtflüssigkeitsschicht 24 an der Oberfläche an, die sich bis in die Filterfüllung 4 hinein erstreckt. Die Zuführung des Gemisches durch das Steigrohr 5 erfolgt in diese geschlossene Leichtflüssigkeitsschicht hinein. Es hat sich gezeigt, daß hierdurch die Filterwirksamkeit wesentlich verbessert wird.

Sobald die Untergrenze 24a der abgeschiedenen Leichtflüssigkeitsschicht bis zur Unterkante 15a der Tauchwand 15 abgesunken ist, kann Leichtflüssigkeit unter der Tauchwand 15 hindurch und durch die Durchtrittsöffnungen 17 der Tauchwand 16 in die Ablaufkammer 14 gelangen. Der sich dann vermindernde Auftrieb des Schwimmers 21 bewirkt, daß der Verschluß 22 absinkt und den Ablauf 18 verschließt. Der größte Teil der Leichtflüssigkeitsschicht 24 muß dann entfernt werden, und anschließend kann durch Zuführung von Spülflüssigkeit durch die Leitung 12 die Filterfüllung 4 rückgespült werden.

Versieht man die Ablaufkammer mit einer Vorrichtung zum kontinuierlichen Abzug der Leichtflüssigkeit, dann braucht der Schwimmerverschluß nur dann in Aktion zu treten, wenn der Leichtflüssigkeitsabzug gestört ist. Der Einlauf für das zuströmende Gemisch in den Filterbehälter ist vorzugsweise in Höhe der Oberkante der Filterfüllung angeordnet, und insbesondere als ein sich durch die Filterfüllung streckendes Steigrohr ausgebildet. Die Vorrichtung zum Abzug der Leichtflüssigkeit aus der Ablaufkammer kann als von Schwerkraftabscheidern her bekannte Kipprinne ausgebildet sein.

Es hat sich gezeigt, daß die besten Abscheideergebnisse mit einer Filterfüllung erzielt werden, die mindestens 70%, vorzugsweise aber etwa 90% freies Volumen hat. Bei einem derart geringen Filterfüllungsvolumen konnte gegenüber einer Kiesfüllung, die nur etwa 40% freies Volumen hat, bei gleichbleibend niedriger Durchströmgeschwindigkeit der wirksame Filterquerschnitt ganz wesentlich verringert werden. Als besonders geeignet hat sich ein Polyurethan-Schaumstoff mit gitterartiger Struktur erwiesen.

Der mit der Erfindung erzielte vorteilhafte Effekt kann durch Versuchsergebnisse belegt werden. Die Versuche wurden durchgeführt mit einem gemäß dem Ausführungsbeispiel konstruierten Filter mit einem Durchmesser von 1200 mm, in welchem eine Filterfüllung von 1040mm Höhe angeordnet war, was einer Filteroberfläche von 0,97 m² und einem Filtervolumen von 1 m³ entspricht. Die Filterfüllung bestand in einem Falle aus Kies, in einem anderen Falle aus einem Polyurethan-Schaumstoff mit Gitterstruktur.

Der Filter wurde beaufschlagt mit zuströmendem Wasser mit einem Ölgehalt, der zwischen 40 und 70 mg/l schwankte. Das im Filter abgeschiedene Öl wurde erfindungsgemäß nicht abgezogen, sondern konnte sich zu einer Ölschicht beträchtlicher Dicke ansammeln. Durch Zugabe zusätzlicher Ölmengen direkt in das Filter konnte die Dicke dieser Ölschicht nach Belieben weiter vergrößert werden, um das Verhalten des Filters nach verschieden langen Betriebszeiten zu simulieren. Die Gesamtdauer jedes Versuches betrug ca. 19 Stunden, und innerhalb

0076891

dieser Zeit sammelte sich im Filter teils durch Abscheidung, teils durch direkte Ölzugabe eine Ölmenge von insgesamt ca. 500 1 an, was einer Höhe der Ölschicht von ca. 520 mm entspricht.

Der Restölgehalt im Ablauf des Filters wurde laufend gemessen. Er betrug bei Verwendung einer Kiesfüllung anfänglich ca. 20 mg/1 und sank nach ca. 5 - 10 Minuten auf ca. 6 mg/1 ab, um dann konstant bei diesem Wert zu bleiben, auch wenn das Filter bis zur halben Höhe mit einer abgeschiedenen Ölschicht gefüllt war. Bei einer Filterfüllung aus Polyurethan-Schaumstoff mit Gitterstruktur, die gegenüber Kies bei vergleichbarer Filteroberfläche wesentlich größere Durchströmungswege und dadurch geringere Strömungsgeschwindigkeit aufweist, betrug der Ölgehalt im Ablauf zu Beginn des Versuches ca 9 mg/1 und sank nach 5 - 10 Minuten auf ca. 3 mg/1 ab, um dann ebenfalls konstant bei diesem Wert zu bleiben.

Diese Versuche belegen, daß der erfindungsgemäße Filter als Abscheider betrieben werden und eine erhebliche Menge von abgeschiedenem Öl (bis zumindestens der halben Höhe der Filterschicht) speichern kann, und daß hierbei die Wirksamkeit des Filters im Hinblick auf

0076891

eine möglichst weitgehende Verringerung des Restölgehaltes im Ablauf nicht nur nicht beeinträchtigt, sondern sogar noch verbessert werden kann, wie der Vergleich der Anfangswerte mit den sich im Dauerbetrieb einstellenden Werten zeigt.

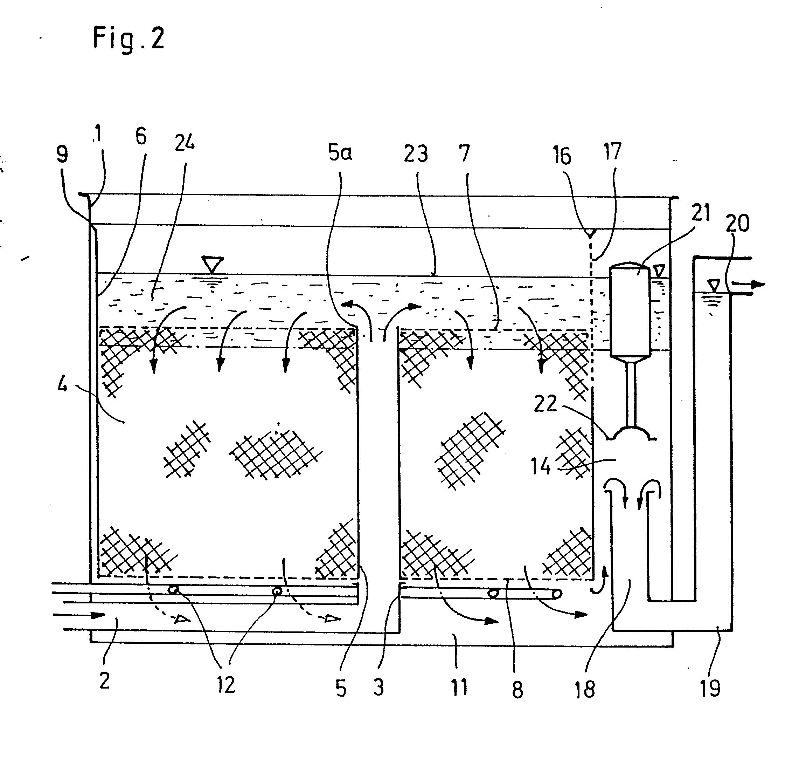

Die Vorrichtung nach Fig. 2 unterscheidet sich von der Ausführungsform nach Fig. 1 im wesentlichen dadurch, daß der die Schwimmerkammer 14 abtrennende Trennwand 16 keine Tauchwand 15 vorgelagert ist. Die in der Trennwand 16 vorgesehenen Öffnungen 17a befinden sich vorzugsweise in Höhe der oberen Begrenzungskante 7 der Filterfüllung 4 oder darüber und sind als sehr feine Durchbrechungen ausgebildet, deren Durchflußwiderstand größer ist als der der Filterfüllung 4. Insbesondere können die Öffnungen oder Durchbrechungen 17 aus feinen Maschen eines Filtergewebes bestehen, welches die Öffnungen in der Trennwand 16 überdeckt. Durch Wahl einer passenden Maschenweite des Filtergewebes kann ein gewünschter Durchflußwiderstand eingestellt werden. Zusätzlich kann das Filtergewebe oleophil und/oder hydrophob beschichtet sein.

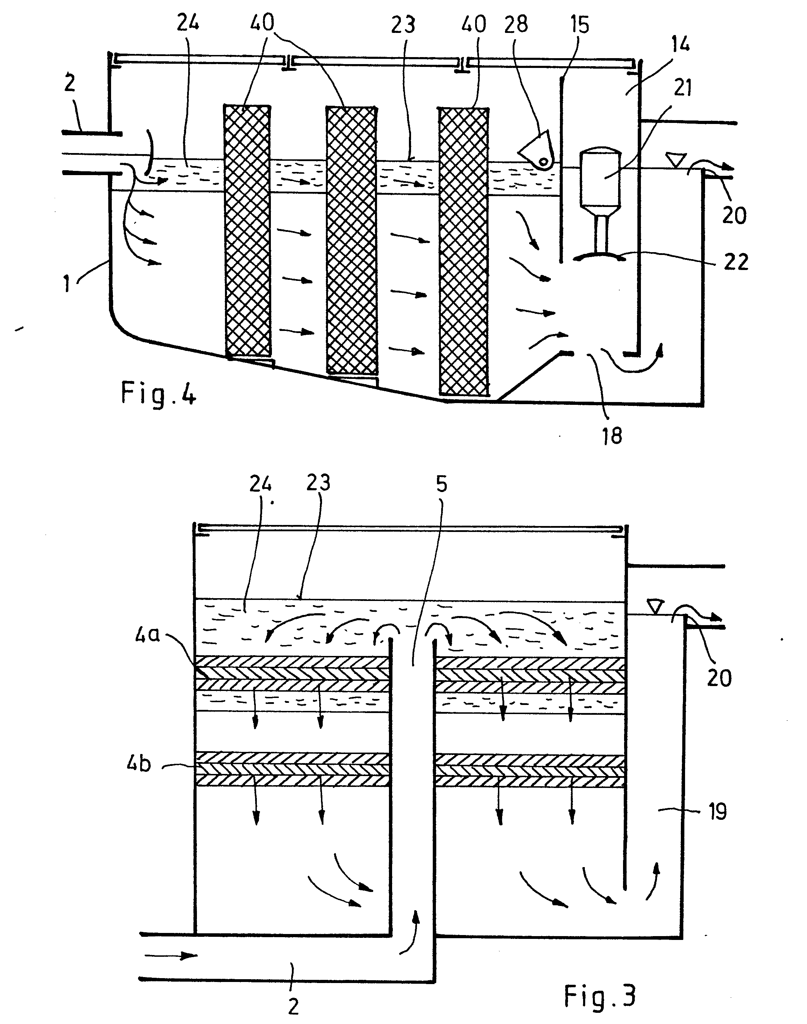

Bei der Ausführungsform nach Fig. 3 ist die Filterfüllung in zwei voneinander getrennte Lagen 4a und 4b aufgeteilt, zwischen denen sich ein Abstand befindet. Die Untergrenze der abgeschiedenen Leichtflüssigkeitsschicht 24

- 15 -

liegt im Normalbetrieb unter der oberen Lage 4a der Filterfüllung, so daß diese vollständig innerhalb der Leichtflüssigkeitsschicht 24 liegt. Als koaleszierend wirkendes Filter im herkömmlichen Sinn arbeitet somit nur die untere Lage 4b der Filterfüllung. Trotzdem wurde überraschenderweise gefunden, daß mit einer derartigen Anordnung, bei geringerem Bedarf an Filterfüllung, ein verbesserter Reinigungseffekt erzielt wird. Jede der beiden Lagen 4a, 4b der Filterfüllung kann, wie durch die unterschiedlich gerichtete Schraffur angedeutet ist, aus mehreren dicht aneinanderliegenden Schichten von Filtermaterial mit verschiedenen Eigenschaften bestehen. Insbesondere können die Schichten unterschiedliche Porengröße aufweisen. Es wurde gefunden, daß auch hierdurch die Filterwirkung verbessert wird, wobei insbesondere die Grenzflächen zwischen den verschiedenen Schichten als Störzonen wirken. Die Ausführungsform nach Fig. 3 ist eine vereinfachte Ausführungsform, bei der eine schwimmergesteuerte Sperrvorrichtung für den Ablauf weggelassen ist. Durch (nicht dargestellte) zusätzliche Einrichtungen wird dafür Sorge getragen, daß die Dicke der Leichtflüssigkeitsschicht 24 im Betrieb konstant bleibt, z. B. durch kontinuierlichen gesteuerten Leichtflüssigkeitsabzug, und/oder daß bei Überschreiten einer maximal zulässigen Dicke der Leichtflüssigkeitsschicht ein Alarm ausgelöst

- 16 -

wird. Davon abgesehen entspricht die Ausführungsform nach Fig. 3 im Aufbau der nach Fig. 1.

Bei der Vorrichtung nach Fig. 4 ist ein im Grundriß rechteckiger Filter- und Abscheiderbehälter 1 vorgesehen, der vom Zulauf 2 bis zum Ablauf im wesentlichen horizontal, jedoch mit abwärts gerichteter Komponente durchströmt wird. In dem Behälter wird durch die ablaufseitige Überlaufkante 20 ein freier Flüssigkeitsspiegel 23 angesteuert, an welchem sich durch die Schwerkraftabscheidung eine schwimmende Leichtflüssigkeitsschicht 24 ansammelt. In dem Behälter 1 sind mehrere vertikal angeordnete Schichten 40 an einer koaleszierend wirkenden Filterfüllung angeordnet, die durch Abstände getrennt sind. Diese ragen bis über den Flüssigkeitsspiegel 23, und sind in ihrem unter dem Flüssigkeitsspiegel 23 liegenden Bereich vollständig von der abgeschiedenen Leichtflüssigkeit 24 durchflutet. Erst unterhalb dieser Leichtflüssigkeit wirken die Filterschichten 40 als koaleszierendes Filter für die vom Zulauf 2 zum Ablauf 18 strömende zu reinigende Flüssigkeit. In den Zwischenräumen zwischen den Filterschichten 40 können abgeschiedene Leichtflüssigkeitströpfchen unbehindert zur Oberfläche ansteigen und sich mit der Leichtflüssigkeitsschicht 24 vereinigen. Der Zulauf 2 ist derart angeordnet, daß mindestens ein wesentlicher Teil der zuströmenden, zu reinigenden Flüssigkeit zunächst die schwimmende Leichtflüssigkeitsschicht 24 durchströmen muß. Eine Kipprinne 28 ist für den gesteuerten Abzug von Leichtflüssigkeit vorgesehen, um die Dicke der Leichtflüssigkeitsschicht 24 im wesentlichen konstant zu halten. Wie bei den Ausführungsformen nach Fig. 1 und 2 ist in einer hier durch eine einfache Tauchwand 15 abgetrennten Schwimmerkammer 14 ein Schwimmer 21 mit einem Verschlußorgan 22 für den Ablauf 18 angeordnet, der den Ablauf verschließt, wenn die Dicke der Leichtflüssigkeitsschicht 24 soweit angewachsen ist, daß Leichtflüssigkeit unter der Unterkante der Tauchwand 15 hindurch in die Schwimmerkammer 14 gelangt und den Schwimmer 21 zum Absinken bringt.

Passavant-Werke AG & Co. KG
6209 Aarbergen 7
-----------------------------------

Vorrichtung zum Abtrennen von Leichtflüssigkeiten wie Öl,
Benzin od.dgl. aus Wasser, mit einem Abscheidebehälter und
einem Filter
-----------------------------------------------------------

Patentansprüche

1.    Vorrichtung zum Abtrennen von Leichtflüssigkeiten

wie Öl, Benzin od.dgl. aus Wasser, bei der das zu reinigende Wasser einen Abscheidebehälter, in welchem eine Schwerkrafttrennung zwischen Leichtflüssigkeit und Wasser erfolgt und die abgeschiedene Leichtflüssigkeit sich in Form einer zusammenhängenden Leichtflüssigkeitsschicht an der freien Flüssigkeitsoberfläche ansammelt, und ein Filter aus einem offenporigen Filtermaterial durchströmt, mit einem im Abscheidebehälter angeordneten, auf die Dicke der Leichtflüssigkeitsschicht ansprechenden Fühler, der bei Erreichen einer maximal zulässigen Schichtdicke der Flüssigkeitsschicht das Sperren des Abzugs des Reinwassers aus dem Filter steuert , dadurch g e k e n n z e i c h n e t , daß die aus einem für die Leichtflüssigkeit koaleszierend wirkenden Material bestehende Filterfüllung (4, 4a, 40) im Abscheidebehälter (1) angeordnet ist und dessen Höhe im wesentlichen vollständig bis zumindest in die Nähe der freien Flüssigkeitsoberfläche ausfüllt.

2.    Vorrichtung nach Anspruch 1 , dadurch g e k e n n - z e i c h n e t , daß die Filterfüllung (4, 4a, 40) mit ihrer Oberkante bis in die abgeschiedene, schwimmende Leichtflüssigkeitsschicht (24) hineinragt.

3.    Vorrichtung nach Anspruch 1 oder 2 , dadurch g e - k e n n z e i c h n e t , daß die Zufuhr des zu reinigenden Wassers oberhalb oder innerhalb der abgeschiedenen, schwimmenden Leichtflüssigkeit erfolgt.

4.    Vorrichtung nach Anspruch 1 , dadurch g e k e n n - z e i c h n e t , daß der auf die Dicke der Leichtflüssigkeitsschicht ansprechende Fühler als Schwimmer (21) ausgebildet ist, der entsprechend dem Dichteunterschied zwischen Wasser und Leichtflüssigkeit tariert ist.

5.    Vorrichtung nach Anspruch 4 , dadurch g e k e n n - z e i c h n e t , daß der Schwimmer in einer neben der Filterfüllung (4a, 4b, 40) angeordneten Schwimmerkammer (14) angeordnet ist, die von dem von der Filterfüllung eingenommenen Raum des Abscheidebehälters (1) durch eine Trennwand (15, 16) getrennt ist und mit ihm durch Öffnungen (17a) kommuniziert.

6.    Vorrichtung nach Anspruch 5 , dadurch g e k e n n - z e i c h n e t , daß die Öffnungen (17a) einen größeren Durchflußwiderstand aufweisen als die Filterfüllung (4).

7.    Vorrichtung nach Anspruch 5 oder 6 , dadurch g e - k e n n z e i c h n e t , daß den Öffnungen (17) eine Tauchwand (15) vorgelagert ist, die den Zutritt von Leichtflüssigkeit zur Schwimmerkammer (14) solange verhindert, bis durch Anwachsen der Leichtflüssigkeitsschicht deren Untergrenze bis unter die Unterkante (15a) der Tauchwand (15) abgesunken ist.

8.    Vorrichtung nach Anspruch 4 , dadurch g e k e n n - z e i c h n e t , daß der Schwimmer (21) ein Ventil (22) für das Sperren der Ablaufleitung (18) für das Reinwasser trägt oder steuert.

9.    Vorrichtung nach Anspruch 1 , dadurch g e k e n n - z e i c h n e t , daß die Abzugsvorrichtung für das Reinwasser aus einem Ablauf mit einem die Aufrechterhaltung des Flüssigkeitsspiegels (23) im Abscheiderbehälter (1) sichernden Überlaufkante (20) ausgebildet ist und der Durchfluß durch die Vorrichtung durch die zulaufseitige Druckhöhe erfolgt.

10.    Vorrichtung nach Anspruch 1 , dadurch g e k e n n - z e i c h n e t , daß die Filterfüllung aus mehreren, nacheinander vom zu reinigenden Wasser durchströmten Schichten (4a, 4b, 40) besteht, die im Abstand voneinander angeordnet sind.

11.    Vorrichtung nach Anspruch 10, dadurch g e k e n n - z e i c h n e t , daß die Schichten (40) im wesentlichen vertikal angeordnet sind und vom zu reinigenden Wasser im wesentlichen horizontal durchströmt werden, wobei jede Schicht (40) bis in oder über die Leichtflüssigkeitsschicht (24) im Abscheiderbehälter ragt.

12.    Vorrichtung nach Anspruch 1 , dadurch g e k e n n - z e i c h n e t , daß eine Einrichtung (28) zum ständigen oder periodischen Abziehen von Leichtflüssigkeit aus der abgeschiedenen Leichtflüssigkeitsschicht (24) vorgesehen ist.

13. Vorrichtung nach Anspruch 5 und 12 , dadurch g e - k e n n z e i c h n e t , daß der Abzug der Leichtflüssig- keit aus der Schwimmerkammer (14) erfolgt.

1/3

## Fig.1

Fig.2

Fig.4

Fig.3

**Europäisches**
**Patentamt**

**EUROPÄISCHER RECHERCHENBERICHT**

00.76891

Nummer der Anmeldung

EP 82 10 5457

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 351 683 (FRIWA BETONWAREN AG) <br> * Ansprüche 1,2; Figuren 1-3; Seite 1, Zeile 40 - Seite 2, Zeile 16; Seite 2, Zeile 30 - Seite 4, Zeile 15 * & DE - A - 2 627 598 | 1-3,9-11 | B 01 D 17/02 <br> C 02 F 1/40 // <br> E 03 F 5/16 |
| X | DE-A-1 517 923 (HECTRONIC AG) <br><br> * Ansprüche 1,2,4,7-10; Figuren 1-4; Seite 3, Zeile 24 - Seite 7, letzte Zeile * | 1,2,9, 12 | |
| X | FR-A-2 375 890 (A.N.V.A.R.) <br><br> * Ansprüche 1,5,7,12; Figur 1; Seite 3, Zeilen 2-27; Seite 7, Zeile 18 - Seite 8, Zeile 2; Seite 8, Zeile 36 - Seite 10, Zeile 34 * & DE - A - 2 800 344 | 1,2,9, 12 | |
| X | DE-A-2 201 273 (INT. POLLUTION CONTROL SYSTEMS INC.) <br> * Figuren 2,9; Ansprüche 7,12,22,38; Seite 4, Zeilen 9-18; Seite 12, Zeile 5 - Seite 14, Zeile 18; Seite 15, Zeilen 3-8 * | 1-4,12 | B 01 D <br> C 02 F <br> E 03 F |
| X | US-A-4 061 573 (R.D. BIRON) <br> * Insgesamt * <br><br> --- -/- | 1,12 | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 25-10-1982 | HOORNAERT P.G.R.J. |

Europäisches
Patentamt

**EUROPÄISCHER RECHERCHENBERICHT**

0076891

Nummer der Anmeldung

EP 82 10 5457

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 583 584 (A. LAWSON) <br><br> * Insgesamt * <br><br> --- | 1,2,10 -12 | |
| A | DE-B-2 929 459 (PASSAVANT-WERKE MICHELBACHER HÜTTE) <br> * Insgesamt * <br><br> --- | 4,8,9 | |
| A | GB-A-2 019 238 (CONTINENTAL OIL COMP.) <br> * Figuren 1,3,4,7; Seite 3, Zeilen 83-89 * & DE - A - 2 905 017 <br><br> --- | 1,2,12 | |
| A | FR-A-2 322 833 (FIRMA PASSAVANT) <br> * Insgesamt * <br><br> ----- | 1,2,4, 8 | |

RECHERCHIERTE SACHGEBIETE (Int. Cl. ³)

Der vorliegende Recherchenbericht wurde für alle Patentansprüche erstellt.

| Recherchenort <br> DEN HAAG | Abschlußdatum der Recherche <br> 25-10-1982 | Prüfer <br> HOORNAERT P.G.R.J. |
|---|---|---|